# FASCICULE DE BREVET EUROPEEN

(11) **EP 1 374 340 B1**
(45) Date de publication et mention de la délivrance du brevet: **06.10.2004**
(21) Numéro de dépôt: 02701392.9
(22) Date de dépôt: 04.02.2002
(51) Int. Cl.: H01Q 13/10, H01Q 1/00, H01Q 3/24, H01Q 9/04

(54) **ANTENNE COMMUTEE**
UMSCHALTBARE ANTENNE
DEVICE FOR RECEIVING AND/OR TRANSMITTING ELECTROMAGNETIC SIGNALS FOR USE IN THE FIELD OF WIRELESS TRANSMISSIONS

(30) Priorité: 23.02.2001 FR 0102500
(43) Date de publication de la demande: 02.01.2004
(73) Titulaire: Thomson Licensing S.A., 92100 Boulogne-Billancourt (FR)
(72) Inventeur: LOUZIR, Ali, F-35000 RENNES cedex (FR); LE BOLZER, Françoise, F-35000 RENNES (FR)
(74) Mandataire: Ruellan-Lemonnier, Brigitte
(86) Numéro de dépôt international: PCT/FR2002/000408
(87) Numéro de publication internationale: WO 2002/069446

(56) Documents cités:
- WO-A-98/15030
- FR-A- 2 785 476
- US-A- 5 281 974
- US-A- 5 714 961

## Description

La présente invention concerne un dispositif pour la réception et/ou l'émission de signaux utilisable dans le domaine des transmissions sans fil, notamment dans le cas de transmissions dans un milieu clos ou semi-clos tel que les milieux domestiques, les gymnases, les studios de télévision ou salles de spectacles, les stades, les gares, etc.

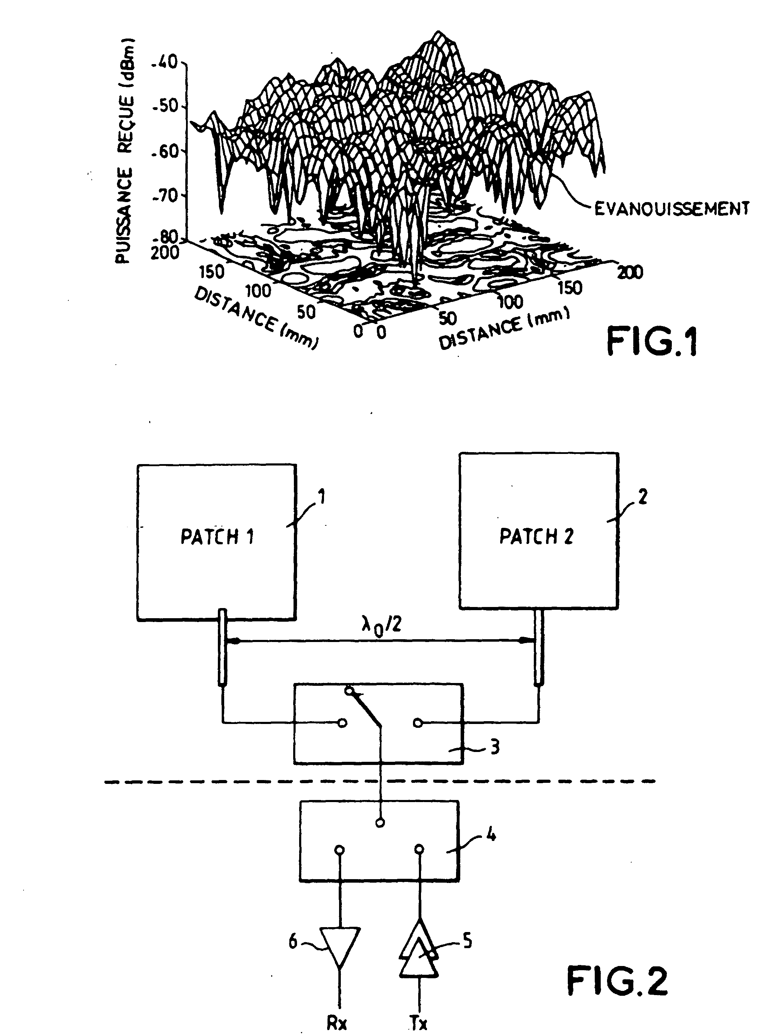

Dans les systèmes connus de transmission sans fil à haut débit, les signaux transmis par l'émetteur atteignent le récepteur selon une pluralité de chemins distincts. Lors de leur combinaison au niveau du récepteur, les différences de phase entre les différents rayons ayant parcouru des chemins de longueurs différentes donnent lieu à une figure d'interférences susceptible de provoquer des évanouissements ou une dégradation importante du signal. Ainsi, comme représenté sur la figure 1 qui concerne la distribution spatiale de la puissance mesurée autour d'un point dans une liaison sans fil en milieu clos à la fréquence de 5,8 GHz, la puissance du signal reçu varie de plusieurs dizaines de décibels sur des distances très courtes de l'ordre de la fraction de longueur d'ondes. D'autre part, l'emplacement des évanouissements change au cours du temps en fonction des modifications de l'environnement telles que la présence de nouveaux objets ou le passage de personnes. Ces évanouissements dus aux multitrajets peuvent entraîner des dégradations importantes tant au niveau de la qualité du signal reçu qu'au niveau des performances du système.

Pour remédier aux problèmes des évanouissements liés aux multitrajets, on utilise actuellement des antennes directives qui permettent de réduire, à travers la sélectivité spatiale de leur diagramme de rayonnement, le nombre de rayons captés par le récepteur, atténuant ainsi l'effet des multitrajets. Dans ce cas, plusieurs antennes directives associées à des circuits de traitement du signal sont nécessaires pour assurer une couverture spatiale de 360°. On a aussi proposé, comme dans la demande de brevet français n° 98 13855 déposée au nom de la demanderesse, une antenne multifaisceaux compacte permettant d'augmenter l'efficacité spectrale du réseau. Toutefois, pour un certain nombre d'équipements domestiques ou portables, ces solutions restent encombrantes et coûteuses.

Pour lutter contre les évanouissements, la technique la plus souvent utilisée est une technique utilisant la diversité spatiale. Comme représenté sur la figure 2, cette technique consiste entre autre à utiliser une paire d'antennes à large couverture spatiale telle que deux antennes du type pastille ou « patch » (1,2) qui sont associées à un commutateur 3. Les deux antennes sont espacées d'une longueur qui doit être supérieure ou égale à λo/2, où λo est la longueur d'ondes correspondant à la fréquence de fonctionnement de l'antenne. Avec ce type de dispositif, on peut montrer que la probabilité que les deux antennes se trouvent simultanément dans un évanouissement est très faible. La démonstration résulte de la description donnée dans « Wireless Digital Communications » Dr. KAMILO FEHER-Chapitre 7 : Diversity Techniques for Mobile-Wireless Radio Systems, en particulier de la Figure 7.8 page 344. On peut aussi le démontrer par un pur calcul de probabilité avec pour hypothèse que les niveaux reçus par chaque patch sont complètement indépendants. On peut affirmer, dans ce cas, que si p ( soit par exemple 1 % ) est la probabilité que le signal reçu par une antenne ait un niveau inférieur à un seuil de détectabilité, alors la probabilité que ce niveau soit en dessous du seuil pour les deux antennes est p² ( soit donc 0.01% ). Si les deux signaux ne sont pas parfaitement décorrelés, alors p_{div} est tel que 0.01% < p_{div} < 1%. p_{div} est la probabilité que le niveau reçu soit inférieur au seuil de détectabilité dans le cas de diversité.

Ainsi, grâce au commutateur 3, il est possible de sélectionner la branche reliée à l'antenne présentant le niveau le plus élevé en examinant le signal reçu par l'intermédiaire d'un circuit de contrôle non représenté. Comme représenté sur la figure 2, le commutateur 3 d'antenne est connecté à un commutateur 4 permettant de faire fonctionner les deux antennes « patch » 1 ou 2 en émission lorsqu'elles sont reliées au circuit Tx5 ou en réception lorsqu'elles sont reliées au circuit Rx6.

Pour résoudre notamment les problèmes d'encombrement, il a été proposé dans le brevet US 5,714,961 de réaliser la diversité de rayonnement en utilisant deux fentes annulaires fonctionnant sur des modes différents, le diagramme de rayonnement des fentes étant contrôlé à l'aide d'un réseau de lignes d'alimentation.

La présente invention a pour but de proposer une solution alternative à la solution décrite ci-dessus, qui présente comme avantages notamment un moindre encombrement, un moindre coût et une plus grande simplicité de mise en oeuvre.

En conséquence, la présente invention a pour objet un dispositif pour la réception et/ou l'émission de signaux électromagnétiques comportant au moins deux moyens de réception et/ou d'émission d'ondes constitué par une antenne de type fente et des moyens de connexion pour connecter au moins un desdits moyens de réception et/ou d'émission à des moyens d'exploitation des signaux, caractérisé en ce que les moyens de connexion sont constitués par une ligne d'alimentation commune, la ligne étant couplée électromagnétiquement avec lesdites antennes de type fente et se terminant par un composant électronique permettant grâce à un signal de contrôle de simuler un court-circuit ou un circuit ouvert au bout de ladite ligne, de sorte que quand le composant est à l'état passant, le diagramme de rayonnement issu du dispositif est différent du diagramme de rayonnement issu du dispositif quand le composant est à l'état bloqué.

Selon un premier mode de réalisation, les antennes de type fente sont constituées par au moins deux fentes résonnantes, l'une à l'intérieur de l'autre, l'une des fentes fonctionnant dans son mode fondamental, les autres fentes fonctionnant dans un mode supérieur. Dans ce cas, les fentes peuvent être de forme annulaire, carrée, rectangulaire ou avoir toute autre forme compatible. De plus, les fentes peuvent être munies de moyens permettant le rayonnement d'une onde polarisée circulairement. Avec un dispositif de ce type, quand le composant électronique est dans l'état passant, le diagramme de rayonnement obtenu est celui de la fente extérieure, tandis que, quand le composant électronique est dans l'état bloqué, le diagramme de rayonnement obtenu résulte de la combinaison du diagramme de rayonnement de la fente intérieure et du diagramme de rayonnement de la fente extérieure. Dans ce dernier cas, l'ajustement en amplitude et en phase des contributions de chaque mode se fait par l'ajustement de la largeur de la ligne d'alimentation et par l'écart entre les centres des deux fentes.

Selon un autre mode de réalisation, les antennes de type fente sont constituées par des antennes de type Vivaldi régulièrement espacées autour d'un point central.

Selon une caractéristique de la présente invention, sur le côté opposé aux moyens d'exploitation des signaux, la ligne d'alimentation est reliée à un composant électronique tel qu'une diode, un transistor monté en diode, des MEMs (pour Micro Electro Mechanical systems), qui permet selon son état de polarisation de simuler un court-circuit (quand elle est polarisée en direct avec une tension positive) ou un circuit ouvert ( pas de tension de polarisation : V=0 ) en bout de ligne : La longueur de la ligne entre le composant et la première fente couplée électromagnétiquement à ladite ligne ainsi que la longueur entre la première fente et la deuxième fente couplées électromagnétiquement à la ligne sont égales, à la fréquence centrale de fonctionnement, à un multiple impair de λm/4, où λm = λo/√εreff avec λo la longueur d'onde dans le vide et εroff la permittivité relative équivalente de la ligne et d'autre part la longueur de la ligne entre les fentes successives suivantes est égale à un multiple de λm/2.

Selon un mode de réalisation, la ligne d'alimentation est une ligne réalisée en technologie microruban ou en technologie coplanaire. D'autre part, les moyens d'exploitation des signaux comportent un moyen de contrôle envoyant sur la ligne d'alimentation une tension supérieure ou égale à la tension de blocage du composant en fonction du niveau des signaux reçus.

D'autres caractéristiques et avantages de la présente invention apparaîtront à la lecture de la description de différents modes de réalisation, cette lecture étant faite avec référence aux dessins ci-annexés dans lesquels :
La figure 1 déjà décrite représente la variation spatiale de la puissance d'une antenne en milieu intérieur.
La figure 2 déjà décrite est une vue schématique en plan d'un dispositif d'émission/réception à diversité spatiale.
La figure 3 est une vue schématique de dessus représentant une topologie d'un dispositif d'émission/réception conforme à la présente invention.
Les figures 4A et 4B représentent le rayonnement d'une fente annulaire dans son mode fondamental et dans un premier mode supérieur.
Les figures 5A à 5E sont respectivement des vues schématiques identiques à celles de la figure 3 expliquant le fonctionnement de la présente invention ainsi que les schémas électriques équivalents.
La figure 6 est une vue schématique d'un dispositif d'émission/réception conforme à un second mode de réalisation de la présente invention.
Les figures 7A et 7B sont des vues, représentant des fentes de forme respectivement identique à celles des figures 6 et 3 mais pour un fonctionnement en polarisation circulaire.
La figure 8 représente schématiquement un autre mode de réalisation d'un dispositif d'émission/réception conforme à la présente invention.
Les figures 9A et 9B sont respectivement une vue schématique d'un dispositif d'émission/réception conforme à la présente invention dans le cas d'antennes alimentées par fentes constituées par des antennes de type Vivaldi et son schéma électrique équivalent.
La figure 10 est une vue d'un dispositif d'émission/réception connecté à des moyens d'exploitation conformes à la présente invention.

Pour simplifier la description dans les figures, les mêmes éléments portent les mêmes références.

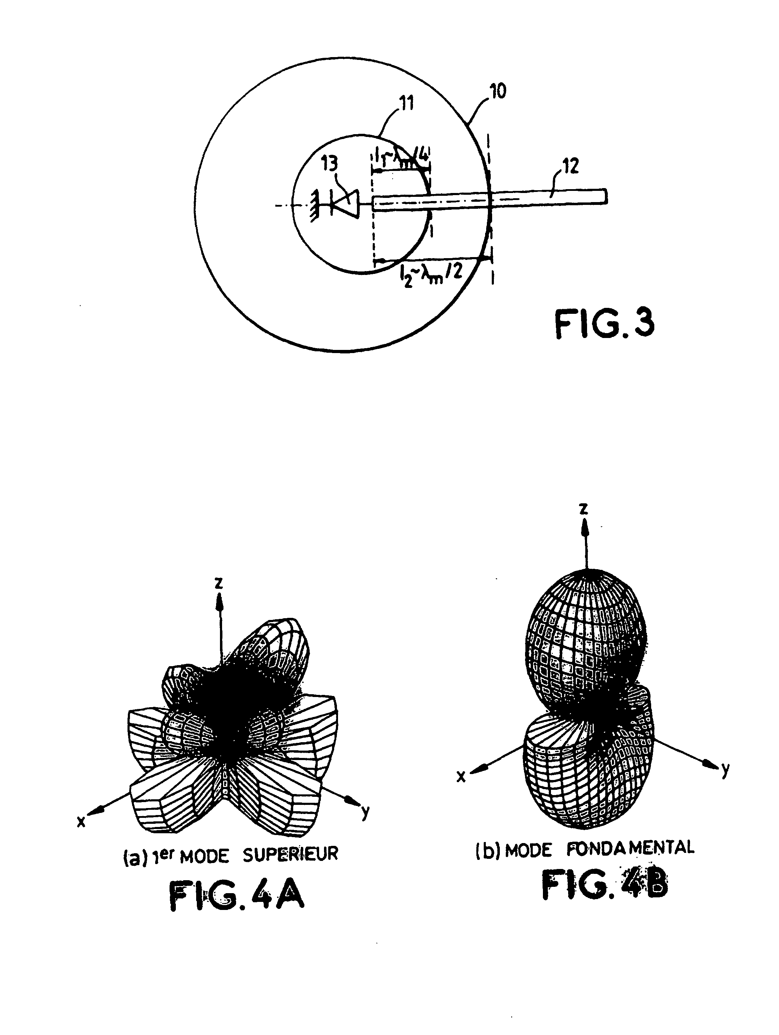

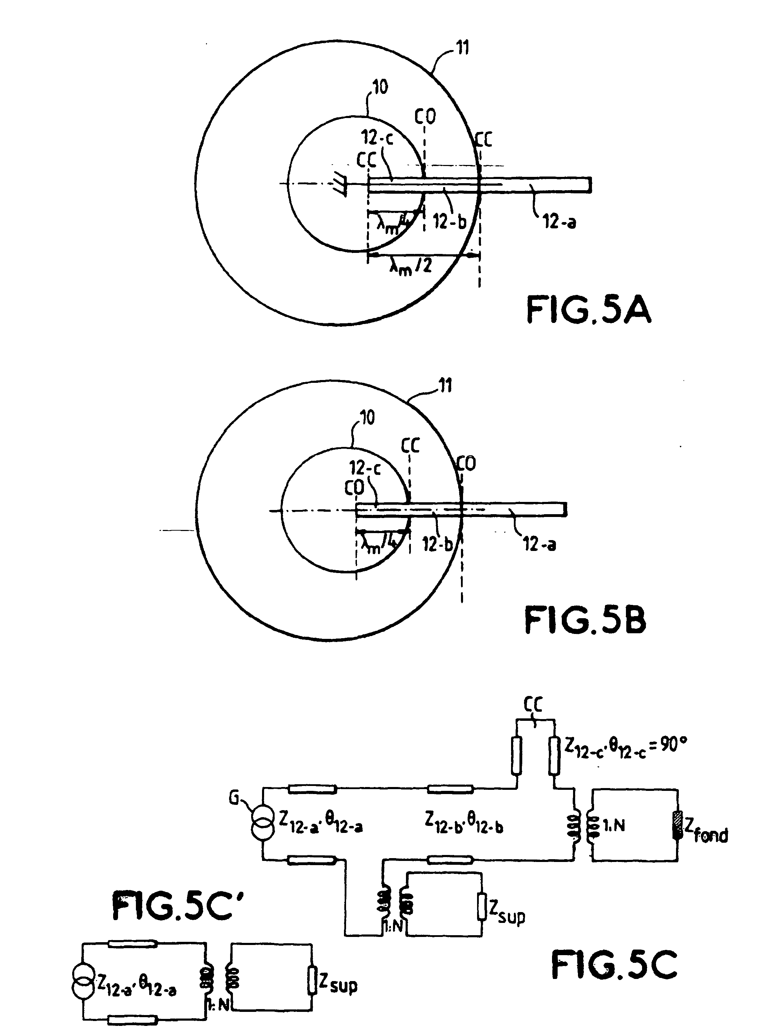

Sur la figure 3, on a représenté schématiquement un premier mode de réalisation d'un dispositif d'émission/réception d'ondes conforme à la présente invention. Dans ce cas, les moyens d'émission/réception d'ondes sont des antennes de type fente. Plus particulièrement, ils sont constitués par deux antennes 10, 11 du type fente annulaire, positionnées l'une à l'intérieur de l'autre. Les deux antennes de type fente annulaire 10 et 11 sont dimensionnées de telle sorte que la fente annulaire intérieure 11 fonctionne sur son mode fondamental tel que représenté sur la figure 4B, tandis que la fente annulaire extérieure 10 fonctionne sur le premier mode supérieur tel que représenté sur la figure 4A. Les diagrammes de rayonnement des figures 4A et 4B correspondant à chaque mode étant différents, les niveaux de puissance résultant de la combinaison des rayons captés pour chaque antenne à travers son diagramme de rayonnement sont donc différents. Comme pour le cas de la diversité spatiale, on peut montrer qu'il est peu probable que les niveaux captés à travers deux combinaisons différentes des deux diagrammes correspondent simultanément à deux évanouissements. En effet, le niveau reçu par une antenne est proportionnel à la résultante (addition vectorielle en amplitude et en phase) des champs des différents « rayons » captés à travers son diagramme de rayonnement. Comme les rayons ont en général parcouru des chemins différents, leurs amplitudes et leurs phases sont en général différentes si bien que leur résultante peut fournir un signal voisin de 0, à savoir un évanouissement ou au contraire peuvent se combiner de manière constructive, à savoir donner une crête de signal. Comme les combinaisons des diagrammes à travers lesquels les multi-trajets sont captés sont différentes, il y a très peu de chances que les signaux qui en résultent correspondent simultanément à un évanouissement. On peut donc le démontrer avec un calcul de probabilité simple tel que celui mentionné ci-dessus. Avec cette disposition, il est donc possible de lutter contre les évanouissements liés aux multi-trajets avec une efficacité équivalente à celle obtenue dans une diversité spatiale classique à condition que l'on puisse commuter simplement d'une fente à l'autre. Pour ce faire, comme représenté sur la figure 3 et comme expliqué avec référence aux figures 5A et 5B, les deux fentes annulaires 10 et 11 sont couplées électromagnétiquement à une ligne d'alimentation commune connectée à des moyens d'exploitation des signaux non-représentés. La ligne d'alimentation 12 est constituée dans le mode de réalisation, par une ligne microruban croisant les deux fentes 10 et 11.

Conformément à la présente invention, l'extrémité de la ligne microruban 12 est connectée à une diode 13, dans le mode de réalisation représenté, dont l'autre extrémité est reliée à la masse. La diode 13 peut être une diode de type PIN (à savoir la diode référencée HS-LP 489 B de chez H.P.). D'autre part, comme représenté sur la figure 3, la longueur I1 de la ligne d'alimentation entre une des bornes de la diode 13 et la première fente annulaire 11 est égale à λm/4 ou à un multiple impair d'environ λm/4 avec λm = λo/√εreff, λo étant la longueur d'onde dans le vide et εreff la permittivité relative équivalente de la ligne. De même, comme représenté sur la figure 3, la longueur I2 de la ligne d'alimentation entre la connexion à la diode 13 et la deuxième fente annulaire 10 est égale à environ λm/2, de manière plus générale à un multiple de λm/2 avec pour λm les valeurs données ci-dessus. On expliquera maintenant avec référence aux figures 5A à 5D, le fonctionnement du dispositif conforme à la présente invention. Quand la diode 13 est à l'état passant, à savoir quand une tension continue de polarisation +V est envoyée à travers la ligne, comme représenté sur la figure 5A, l'extrémité de la ligne 12 opposée au moyen d'excitation se trouve dans un plan de court-circuit. Etant donné le dimensionnement de la ligne donnée ci-dessus, le plan de croisement entre la ligne microruban 12 et la première antenne 10 est équivalent à un plan de circuit ouvert alors que le plan de croisement avec la deuxième fente 11 correspond à un plan de court-circuit. Dans ces conditions, comme le montre le schéma équivalent de la figure 5C seule l'antenne de type fente annulaire extérieure 11 est excitée et le diagramme de l'antenne est celui du premier mode supérieur, à savoir celui représenté sur la figure 4A. Le schéma équivalent de la figure 5C a été obtenu à partir du schéma équivalent connu d'une transition simple entre une ligne microruban et une ligne fente proposée pour la première fois par B. Knorr, lors d'un fonctionnement près de la résonance. Le circuit est constitué d'une impédance du mode fondamental notée Zfond correspondant à la fente annulaire 10. L'impédance est reliée à un transformateur d'impédance de rapport N :1. L'autre branche du transformateur d'impédance est connectée en série à la résistance (correspondant à la mise en court-circuit de l'extrémité de la ligne 12) ramenée par le bout de ligne 12c d'impédance caractéristique Z_{12c} et de la longueur électrique θ_{12c} avec la ligne microruban 12b d'impédance caractéristique Z_{12b} et de longueur électrique θ_{12c}. Cette ligne est reliée à un autre transformateur d'impédance de rapport 1 :N relié au circuit équivalent Zₛᵤₚ de la fente annulaire 12. L'ensemble 12 est relié par une longueur de ligne microruban 12a d'impédance caractéristique Z₁₂ₐ et de longueur électrique θ₁₂ₐ à un circuit d'excitation symbolisé par le générateur G. Le court-circuit CC de la diode ramène un circuit ouvert CO par la ligne 12c qui est un quart d'onde. La ligne 12b, également un quart d'onde, ramène à son tour un court-circuit CC. On se retrouve ainsi avec le schéma équivalent de la figure 5C' qui correspond à un fonctionnement à une fente où seule la fente fonctionnant sur le mode supérieur est excitée.

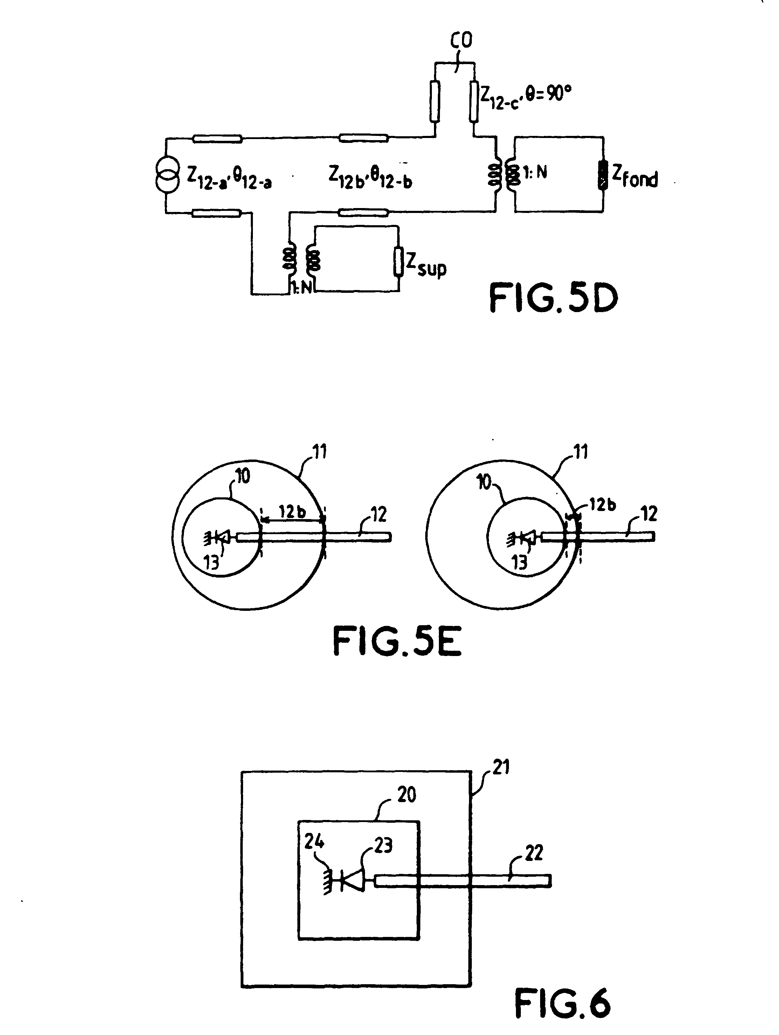

Lorsque, comme représenté sur la figure 5B, la diode 13 est à l'état bloqué, à savoir G est à une tension de polarisation nulle, l'extrémité de la ligne connectée à la diode se trouve dans un plan de circuit ouvert CO. Dans ces conditions, comme le montre le schéma équivalent de la figure 5D, les deux fentes sont excitées puisque cette fois le circuit ouvert CO de la diode ramène un court-circuit CC par la ligne quart d'onde 12c. Le diagramme de l'antenne est celui résultant du mode fondamental provenant de la petite fente 10 et du mode supérieur provenant de la grande fente 11. La pondération en amplitude de chaque mode peut être ajustée par les valeurs relatives des impédances ramenées par chaque mode en entrée de l'antenne à travers la ligne d'excitation 12. La pondération en phase peut être ajustée par l'espacement entre les centres, à savoir la longueur 12b des deux fentes comme présenté sur les figures 5E.

Par ailleurs pour que dans son fonctionnement en mode passant pour la diode, le dispositif d'antenne permette l'excitation du seul mode supérieur de la fente extérieure, il faut que la longueur 12b soit égale à environ un multiple impair de λm/4.

La solution décrite ci-dessus permet d'obtenir un dispositif d'émission/ réception de signaux d'encombrement plus réduit que le dispositif représenté à la figure 2. D'autre part, dans ce cas, une simple diode est utilisée à la place d'un commutateur à trois bornes, ce qui permet de réduire le coût du dispositif et aussi les pertes de commutation, et une seule ligne d'alimentation commune est utilisée, ce qui simplifie la mise en oeuvre du système.

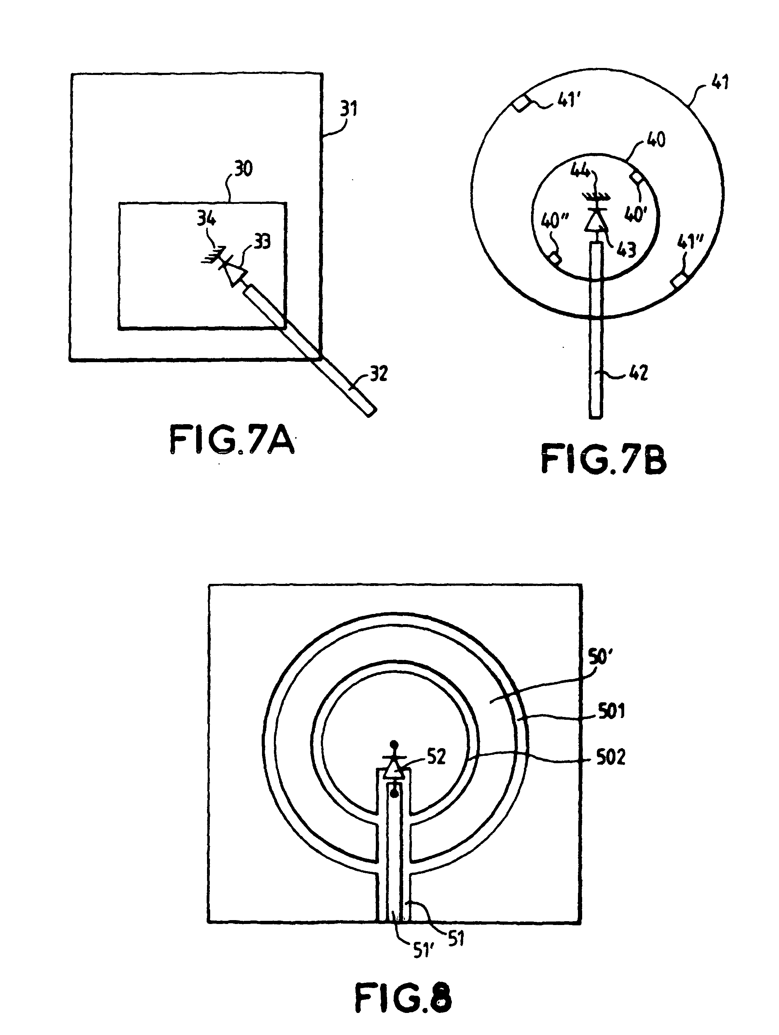

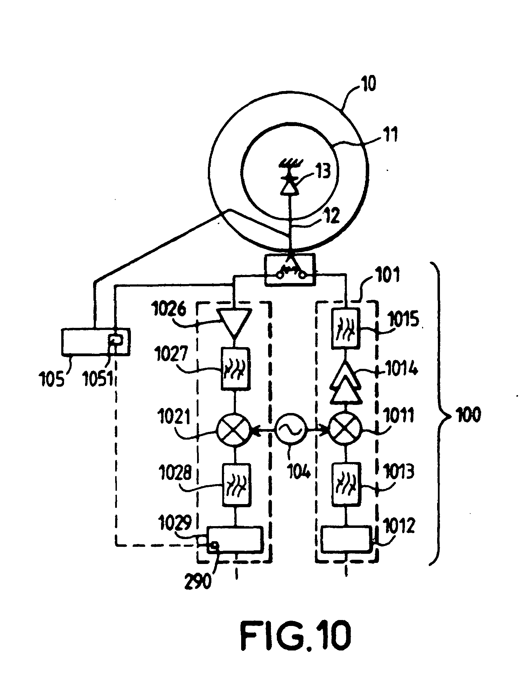

On décrira maintenant avec référence aux figures 6 à 10, différents autres modes de réalisation d'antennes d'émission/réception de type fente, pouvant être utilisées dans le cadre de la présente invention. Ainsi, comme représenté sur la figure 6, les antennes alimentées par fente sont constituées par deux fentes de forme carrée 20, 21 positionnées l'une dans l'autre et alimentées par une ligne d'alimentation microruban 22 connectée en série à une diode 23 dont l'autre extrémité est reliée à un plan de masse symbolisé par 24. La ligne d'alimentation 22 est positionnée par rapport aux fentes carrées 20 et 21 de manière à avoir un fonctionnement en polarisation linéaire. Sur les figures 7A et 7B, on a représenté des antennes de type fente semblables à celles des figures 3 et 6. Toutefois, ces antennes sont modifiées de manière à pouvoir fonctionner en polarisation circulaire. Ainsi, sur la figure 7A, les fentes 30 et 31 sont constituées par deux carrés imbriqués l'un dans l'autre alimentés par une ligne microruban 33 selon une des diagonales des carrés, cette ligne d'alimentation se terminant par une diode 33 connectée en série entre l'une des extrémités de la ligne 32 et le plan de masse 34. Dans le cas de la figure 7B, les fentes sont constituées par deux fentes annulaires 40, 41 l'une dans l'autre, les fentes annulaires étant munies de moyens connus pour réaliser une polarisation circulaire, à savoir d'encoches 40', 40", 41', 41" diagonalement opposées.

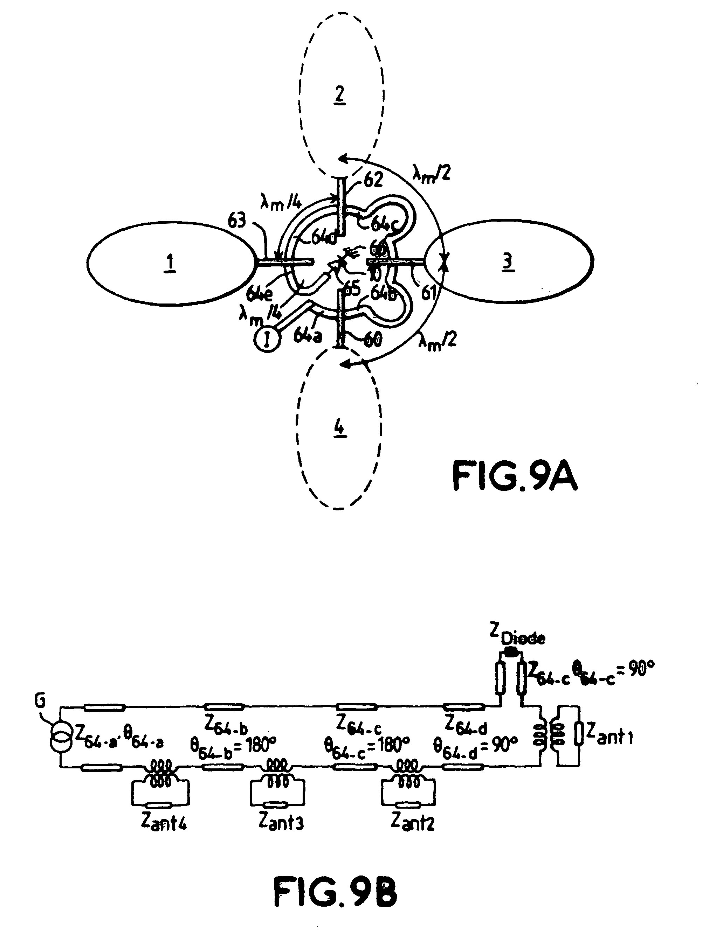

Conformément à la présente invention, les fentes annulaires 40 et 41 sont excitées par une ligne d'alimentation 32 croisant les deux fentes 40 et 41 selon un dimensionnement tel que donné ci-dessus, l'extrémité de la ligne 42 étant connectée à une diode 43 reliée en série entre la ligne 42 et un plan de masse 44. Sur la figure 8, on a représenté deux antennes de type fente et une ligne d'alimentation commune réalisées en technologie coplanaire. Dans ce cas, l'excitation des fentes annulaires se fait par la ligne coplanaire 51. La diode 52 est alors montée entre l'élément métallique 51' de la ligne d'alimentation 51 et la partie métallique 50' du substrat sur lequel est réalisée les fentes 50₁ et 50₂ annulaires formant antenne.

Les figures 9A et 9B concernent un autre mode de réalisation d'un dispositif conforme à la présente invention dans le cas où les moyens de réception et/ou d'émission d'ondes constitués par une antenne de type fente sont constitués par des antennes de type Vivaldi. Dans ce cas, les antennes de type Vivaldi sont régulièrement espacées autour d'un point central référencé O sur les figures de manière à obtenir une couverture spatiale importante.

Sur la figure 9A, on a représenté des moyens de réception et/ou d'émission d'ondes constitués par quatre antennes Vivaldi positionnées perpendiculairement les unes aux autres, ces antennes de forme connue étant symbolisées par les fentes 60, 61, 62, 63. La structure des antennes Vivaldi étant bien connue de l'homme de l'art, elle ne sera pas décrite plus en détail dans le cadre de l'invention. Conformément à la présente invention, les quatre antennes Vivaldi 60, 61, 62, 63 sont excitées par l'intermédiaire d'une seule ligne d'alimentation 64 réalisée, par exemple, en technologie microruban. Cette ligne d'alimentation croise les fentes des quatre antennes Vivaldi de telle sorte que :
i) La longueur de l'intervalle de ligne situé entre les deux premières fentes comptée à partir de l'extrémité de la ligne reliée à la diode ( fente 63 et fente 62) est égale à λm/4 , de manière plus générale à un multiple impair d'environ λm/4,
ii) La longueur de tous les autres intervalles de ligne entre deux fentes successives ( soit donc dans le cas de la figure 9, entre les fentes 62 et 61 et entre les fentes 61 et 60 ) est égale à λm/2, de manière plus générale à un multiple d'environ λm/2.,

Conformément à la présente invention, une diode 65 est reliée entre l'extrémité de la ligne d'alimentation 64 et un plan de masse 66. La distance entre la dernière antenne Vivaldi 63 et la diode 64 est de λm/4 ou un multiple impair de λm/4. Avec cette disposition particulière d'un dispositif pour la réception et/ou l'émission de signaux multifaisceaux, comme le montre le schéma équivalent de la figure 9B, le diagramme résultant de l'antenne correspond aux faisceaux (2), (3), et (4) quand la diode 65 est à l'état passant, à savoir sa tension de polarisation est positive. Ce schéma équivalent correspond à celui de 4 transitions ligne microruban-ligne fente telle que décrite par Knor, séparées par des longueurs électriques correspondant aux longueurs de lignes indiquées sur la Figure 9A et à l'impédance de la diode située au bout de la ligne microruban excitatrice. Quand la diode est à l'état bloqué ( V=0 ) le diagramme résultant correspond aux quatre faisceaux : (1), (2), (3), et (4).

La présente invention a été décrite en utilisant une diode comme composant électronique. Toutefois, la diode peut être remplacée par un transistor, un MEM (Micro Electro Mechanical system) ou tout système connu équivalent. De même, l'antenne de type fente peut avoir toute forme polygonale compatible autre que les formes représentées.

On décrira maintenant, avec référence à la figure 11, un mode de réalisation d'un circuit d'exploitation des signaux d'émission et de réception qui peut être utilisé dans le cadre de la présente invention. Dans ce cas, la ligne d'alimentation 12 relie le circuit d'exploitation des signaux 100 au dispositif d'antennes 10, 11 par un commutateur 103. Les circuits 100 comportent un circuit 101 d'émission relié à une entrée du commutateur 103 pour la conversion en haute-fréquence des signaux vers le système d'antennes et un circuit de réception 102 relié à une borne du commutateur 101 pour la conversion en fréquence intermédiaire des signaux reçus par le dispositif d'antennes 10, 11. De manière connue, chaque circuit 101, 102 comporte respectivement un mélangeur 1011, 1021 et un même oscillateur local 104 est utilisé en entrée desdits mélangeurs pour la transposition de fréquence. Le circuit 101 de la voie montante comprend en entrée un circuit de modulation 1012 des signaux entrants en bande de base reliés en sortie à une entrée d'un filtre 1013 de réjection de la fréquence image. La sortie du filtre est reliée à une entrée du mélangeur 1011. Les signaux sortant du mélangeur ont été convertis en haute-fréquence et attaquent l'entrée d'un amplificateur de puissance 1014 dont la sortie est reliée à l'entrée d'un filtre passe-bande 1015 de bande passante centrée autour de la fréquence d'émission. Le circuit 102 comprend en entrée un amplificateur 1026 à faible bruit relié à son entrée à une sortie de commutateur 103 et en sortie à un filtre de réjection 1027 de la fréquence-image des signaux convertibles. La sortie du filtre est reliée à une entrée du mélangeur 1021 dont la sortie fournit les signaux transposés à l'aide de l'oscillateur 104 en fréquence intermédiaire. Ces signaux, après filtrage par le filtre passe-bande 1028 de bande passante centrée autour de la fréquence intermédiaire, sont envoyés sur un circuit de démodulation 1029 apte à démoduler lesdits signaux en bande base. Les signaux en sortie du circuit sont alors fournis à des circuits de traitement. D'autre part, le signal reçu par le circuit de réception est mesuré par un microprocesseur 105 et enregistré dans un registre 1051. Cette mesure est régulièrement effectuée à des intervalles de temps prédéterminés et suffisamment courts pour qu'aucune perte d'information ne puisse avoir lieu. Lorsque le niveau du signal est en dessous d'un seuil préenregistré, le microcontrôleur envoie sur la ligne d'alimentation une tension V permettant de rendre la diode passante ou non-passante de manière à exciter certaines des fentes, conformément à la présente invention. Dans le mode de réalisation, la méthode de sélection du faisceau optimal s'effectue selon une méthode de diversité de rayonnement avec prédétection, le choix du faisceau se réalisant en amont des moyens d'exploitation des signaux en déterminant le faisceau dont le niveau de signal est le plus élevé. D'autres méthodes peuvent être implémentées, notamment une méthode de diversité de rayonnement avec post-détection pour le choix du faisceau optimal, le choix du faisceau se réalisant alors en aval des circuits 100 en sélectionnant la voie présentant le meilleur taux d'erreurs. Dans ce cas, le démodulateur comporte un circuit de calcul du Taux d'Erreur Binaire (TEB ou Bit Error Rate ( BER ) en anglais) . Il est évident pour l'homme de l'art que l'invention n'est pas limitée aux modes de réalisation et variantes décrits ci-dessus.

## Revendications

1. Dispositif pour la réception et/ou l'émission de signaux comportant au moins deux moyens de réception et/ou d'émission d'ondes constitués par une antenne de type fente (10,11, 20,21 ; 30,31 ; 40,41/50₁, 50₂, 60, 61, 62, 63), et des moyens de connexion pour connecter au moins un desdits moyens de réception et/ou d'émission à des moyens d'exploitation des signaux multifaisceaux,
**caractérisé en ce que** les moyens de connexion sont constitués par une ligne d'alimentation commune (12, 22 51, 32, 42, 64), la ligne étant couplée électromagnétiquement avec lesdites antennes de type fente et se terminant par un composant électronique permettant grâce à un signal de contrôle de simuler un court-circuit ou un circuit ouvert au bout de ladite ligne de sorte que, quand le composant est à l'état passant le diagramme de rayonnement issu du dispositif est différent du diagramme de rayonnement issu du dispositif quand le composant est à l'état bloqué.

2. Dispositif selon la revendication 1, **caractérisé en ce que** les antennes de type fente sont constituées par au moins deux fentes (10, 11, 20, 21) résonnantes l'une à l'intérieur de l'autre, l'une des fentes fonctionnant dans son mode fondamental et les autres fentes fonctionnant dans un mode supérieur.

3. Dispositif selon la revendication 2 **caractérisé en ce que** la largeur de la ligne d'alimentation (12) et l'écart entre les centres des deux fentes (11 , 10) sont choisis pour donner un ajustement en amplitude et en phase des différents modes de fonctionnement, lorsque le composant est à l'état bloqué.

4. Dispositif selon la revendication 2, **caractérisé en ce que** les fentes sont de forme annulaire, carrée, rectangulaire ou polygonale.

5. Dispositif selon l'une quelconque des revendications 2 à 4, **caractérisé en ce que** les fentes sont munies de moyens permettant le rayonnement d'une onde polarisée circulairement.

6. Dispositif selon la revendication 1, **caractérisé en ce que** les antennes de type fente sont constituées par des antennes de type Vivaldi régulièrement espacées autour d'un point central.

7. Dispositif selon l'une quelconque des revendications 1 à 6, **caractérisé en ce que**, d'une part, la longueur de la ligne entre le composant électronique et la première fente couplée électromagnétiquement à ladite ligne, ainsi que la longueur entre la première fente et la deuxième fente couplées electromagnétiquement à la ligne sont égales, à la fréquence centrale de fonctionnement, à un multiple impair de λm/4, et la longueur de la ligne entre les fentes successives suivantes est égale à un multiple de λm/2 où λm = λo/√εreff avec λo la longueur d'onde dans le vide et εreff la permittivité relative équivalente de la ligne.

8. Dispositif selon la revendication 7, **caractérisé en ce que** la ligne d'alimentation est une ligne réalisée en technologie microruban ou en technologie coplanaire.

9. Dispositif selon l'une quelconque des revendications précédentes, **caractérisé en ce que** le composant électronique est constitué par une diode, un transistor, un Micro Electro Mechanical système.

10. Dispositif selon l'une quelconque des revendications 1 à 9, **caractérisé en ce que** les moyens d'exploitation des signaux comportent un moyen de contrôle envoyant sur la ligne d'alimentation une tension supérieure ou égale à la tension de blocage du composant en fonction du niveau des signaux reçus.

## Claims

1. Device for the reception and/or the transmission of signals comprising at least two means of reception and/or of transmission of waves consisting of a slot type antenna (10, 11, 20, 21; 30, 31; 40, 41/50₁, 50₂, 60, 61, 62, 63), and means of connection for connecting at least one of the said means of reception and/or of transmission to means of utilization of the multibeam signals,
**characterized in that** the means of connection consist of a common feed line (12, 22, 51, 32, 42, 64), the line being coupled electromagnetically with the said slot type antennas and terminating in an electronic component making it possible by virtue of a control signal to simulate a short-circuit or an open circuit at the extremity of the said line so that, when the component is in the on state the radiation pattern emanating from the device is different from the radiation pattern emanating from the device when the component is in the off state.

2. Device according to Claim 1, **characterized in that** the slot type antennas consist of at least two resonant slots (10, 11, 20, 21) one inside the other, one of the slots operating in its fundamental mode and the other slots operating in a higher mode.

3. Device according to Claim 2, **characterized in that** the width of the feed line (12) and the gap between the centres of the two slots (11, 10) are chosen so as to give an amplitude-wise and phase-wise adjustment of the various modes of operation, when the component is in the off state.

4. Device according to Claim 2, **characterized in that** the slots are of annular, square, rectangular or polygonal shape.

5. Device according to any one of Claims 2 to 4, **characterized in that** the slots are furnished with means allowing the radiation of a circularly polarized wave.

6. Device according to Claim 1, **characterized in that** the slot type antennas consist of Vivaldi type antennas regularly spaced around a central point.

7. Device according to any one of Claims 1 to 6, **characterized in that**, on the one hand, the length of the line between the electronic component and the first slot electromagnetically coupled to the said line, as well as the length between the first slot and the second slot that are electromagnetically coupled to the line are equal, at the central frequency of operation, to an odd multiple of λm/4, and the length of the line between the subsequent successive slots is equal to a multiple of λm/2 where λm = λo/√εreff with λo the wavelength in vacuo and εreff the equivalent relative permittivity of the line.

8. Device according to Claim 7, **characterized in that** the feed line is a line embodied in microstrip technology or in coplanar technology.

9. Device according to any one of the preceding claims, **characterized in that** the electronic component consists of a diode, a transistor, a Micro Electro Mechanical system.

10. Device according to any one of Claims 1 to 9, **characterized in that** the means of utilization of the signals comprise a control means sending over the feed line a voltage greater than or equal to the turn-off voltage of the component as a function of the level of the signals received.

## Patentansprüche

1. Gerät für den Empfang und/oder die Sendung von Signalen mit wenigstens zwei Mitteln zum Empfang und/oder Übertragung von Wellen, wobei die Mittel aus einer Schlitzantenne (10, 11, 20, 21; 30, 31; 40, 41/50₁, 50₂, 60, 61, 62, 63) bestehen und mit Mitteln zur Verbindung wenigstens eines der Mittel zum Empfang und/oder Sendung mit Auswertmitteln der Mehrstrahlsignale,
**dadurch gekennzeichnet, dass**
die Mittel zur Verbindung aus einer gemeinsamen Speiseleitung (12, 22, 51, 32, 43, 64) bestehen, dass die Leitung elektromagnetisch mit den Schlitzantennen gekoppelt ist und in einer elektronischen Komponente abschließt, die es durch ein Steuersignal ermöglicht, eine kurzgeschlossene oder offene Schaltung am Ende der Leitung zu simulieren, so dass dann, wenn die Komponente sich in dem EIN-Zustand befindet, das Strahlungsdiagramm von dem Gerät sich unterscheidet von dem Strahlungsdiagramm von dem Gerät, wenn die Komponente sich in dem AUS-Zustand befindet.

2. Gerät nach Anspruch 1, **dadurch gekennzeichnet, dass** die Schlitzantennen aus wenigsten zwei abgestimmten Schlitzen (10, 11, 20, 21) auf der Innenseite der anderen bestehen und einer der Schlitze sich in dem Grundmodus und die anderen Schlitze in einem höheren Modus arbeiten.

3. Gerät nach Anspruch 2, **dadurch gekennzeichnet, dass** die Breite der Speiseleitung (12) und der Spalt zwischen den Mitten der beiden Schlitze (11, 12) so gewählt sind, dass sie eine Amplituden- und Phaseneinstellung der verschiedenen Betriebsmodi ermöglichen, wenn sich die Komponente in dem AUS-Zustand befindet.

4. Gerät nach Anspruch 2, **dadurch gekennzeichnet, dass** die Schlitze eine ringförmige, quadratische, rechteckförmige oder polygonale Form aufweisen.

5. Gerät nach einem der Ansprüche 2 bis 4, **dadurch gekennzeichnet, dass** die Schlitze mit Mitteln versehen sind, die die Strahlung einer zirkularpolarisierten Welle ermöglichen.

6. Gerät nach Anspruch 1, **dadurch gekennzeichnet, dass** die Schlitzantennen aus Vivaldi-Antennen bestehen, die gleichmäßig um einen Mittelpunkt beabstandet sind.

7. Gerät nach einem der Ansprüche 1 bis 6, **dadurch gekennzeichnet, dass** einerseits die Länge der Leitung zwischen der elektronischen Komponente und dem ersten Schlitz elektromagnetisch mit der Leitung gekoppelt ist, ebenso wie die Länge zwischen dem ersten Schlitz und dem zweiten Schlitz, die elektromagnetisch mit der Leitung verkoppelt sind, gleich sind bei der Betriebs-Mittenfrequenz zum Beispiel bei einem ungeradzahligen Vielfachen von λm/4 und die Länge der Leitung zwischen den aufeinanderfolgenden Schlitzen gleich ist einem Vielfachen von λm/2, wobei λm = λo√εreff ist mit λo = der Wellenlänge im Vakuum und εreff die relative Permittivität der Leitung ist.

8. Gerät nach Anspruch 7, **dadurch gekennzeichnet, dass** die Speiseleitung eine Leitung in Mikrostreifen-Technologie oder in coplanarer Technologie ist.

9. Gerät nach einem der vorangehenden Ansprüche, **dadurch gekennzeichnet, dass** die elektronische Komponente aus einer Diode, einem Transistor, einem mikroelektrischen/mechanischen System besteht.

10. Gerät nach einem der Ansprüche 1 bis 9, **dadurch gekennzeichnet, dass** die Mittel zur Auswertung der Signale ein Steuermittel enthalten, das über die Speiseleitung eine Spannung sendet, die größer als oder gleich der Abschaltspannung der Komponente in Abhängigkeit von dem Wert der empfangenen Signale ist.
